(19) Europäisches Patentamt
European Patent Office
Office européen des brevets

(11) **EP 4 769 226 A1**

(12) **EUROPEAN PATENT APPLICATION**

(43) Date of publication:
**01.07.2026 Bulletin 2026/27**

(21) Application number: **25225454.5**

(22) Date of filing: **19.12.2025**

(51) International Patent Classification (IPC):
*G06N 3/0495* (2023.01)

(52) Cooperative Patent Classification (CPC):
G06N 3/0495

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024 US 202463740728 P**
**01.08.2025 US 202519288530**
**21.08.2025 PCT/CA2025/051098**

(71) Applicant: **Multiverse Computing Inc.**
**Toronto, ON M5C 2T2 (CA)**

(72) Inventors:
• ORÚS, Roman
  Toronto, ON, M5C 2T2 (CA)
• JAHROMI, Saeed
  Toronto, ON, M5C 2T2 (CA)
• SINGH, Sukhbinder
  Toronto, ON, M5C 2T2 (CA)

(74) Representative: **Balder IP Law, S.L.**
**Paseo de la Castellana 93**
**5ª planta**
**28046 Madrid (ES)**

(54) **SYSTEM AND METHOD FOR DECISION-MAKING IN HARDWARE SYSTEMS USING QUANTUM-INSPIRED COMPRESSED MODELS**

(57) Various methods and systems for determining a decision for an offline hardware system that includes at least one system processor, sensors and at least one specialized hardware processor are described herein. The method involves receiving, at the at least one system processor, sensor data from the sensors, preprocessing, at the at least one system processor, the sensor data to obtain preprocessed sensor data; determining, at the at least one specialized hardware processor, using one or more trained decision-making models the decision for the offline hardware system based on the preprocessed sensor data and generating a command for the hardware system based on the decision. Each of the one or more decision-making models is a large language model (LLM) compressed using tensor networks. The offline hardware system can be a component of systems or devices such as ship, a vehicle, a satellite or a defense system.

FIG. 1A

FIG. 1B

## Description

### FIELD

The embodiments described herein generally relate systems and methods for decision-making in hardware systems using quantum-inspired compressed models.

### BACKGROUND

The following paragraphs are provided by way of background to the present disclosure. They are not, however, an admission that anything discussed therein is prior art or part of the knowledge of persons skilled in the art.

Sensor data is commonly used by systems to determine an action for a system. For example, sensor data can be used by vehicles to alert a driver of the presence of an object such as another vehicle. Similarly, sensor data can be used by self-driving vehicles to enable the self-driving vehicles to stay within a lane. Typically, sensor data is collected and transmitted externally via an internet connect to a model trained to identify an action to be taken by the system based on the sensor data.

A common approach in decision-making systems is to transmit sensor data from edge devices (e.g., cameras, LiDAR sensors, and embedded processors) to remote servers that execute complex machine learning models. These models, often based on deep learning architectures, process incoming data and return a decision to the hardware system. This cloud-based approach enables high-accuracy decision-making, as large-scale models with high computational requirements can be utilized.

However, reliance on cloud-based decision-making presents several challenges. For example, transmitting large volumes of sensor data introduces latency, which can be detrimental in mission-critical applications such as autonomous driving, satellite navigation, and defense systems. As another example, if network connection is lost or disrupted, a system may fail to receive timely decisions, leading to operational failures or safety risks. As a further example, real-time processing on remote servers requires significant energy consumption and computational resources, making it unsuitable for power-constrained environments such as spacecraft or battery-operated industrial systems.

To mitigate these challenges, some existing systems incorporate local processing units that perform basic pre-processing of sensor data before transmission. For example, in automotive applications, onboard processors may filter and compress raw sensor data before sending it to a cloud-based decision-making system. However, these local processing units typically lack the computational power to run full-scale machine learning models, limiting their ability to make autonomous decisions without external assistance.

Therefore, there is a need for a hardware system that can efficiently perform decision-making.

### SUMMARY OF VARIOUS EMBODIMENTS

Various embodiments of a quantum-inspired system and method decision-making in hardware systems using quantum-inspired compressed models.

In accordance with an aspect of this disclosure, there is provided a method of determining a decision for an offline hardware system comprising at least one system processor, a plurality of sensors and at least one specialized hardware processor. The method involves receiving, at the at least one system processor, sensor data from the plurality of sensors; preprocessing, at the at least one system processor, the sensor data to obtain preprocessed sensor data; determining, at the at least one specialized hardware processor, using one or more trained decision-making models the decision for the offline hardware system based on the preprocessed sensor data, each of the one or more decision-making models being a large language model (LLM) compressed using tensor networks; and generating a command for the hardware system based on the decision

In some embodiments, each of the at least one hardware processor is a field programmable gate array (FPGA) or an analog chip.

In some embodiments, the offline hardware system is a component of one of: a ship, a vehicle, a satellite or a defense system.

In some embodiments, at least one of the one or more trained decision-making models is compressed by: identifying layers of the LLM and corresponding weight matrices; decomposing the weight matrices of the LLM into a tensor network structure; compressing the decomposed weight matrices; and storing the tensor network structure in a data storage medium for transferring to the hardware system.

In some embodiments, at least one of the one or more trained decision-making models is compressed by pruning and healing the at least one of the one or more trained decision-making models.

In some embodiments, preprocessing the sensor data comprises one or more of: reducing noise in the sensor data, normalizing sensor data values, extracting features from the sensor data determined to be relevant.

In some embodiments, the decision is an operation critical decision.

In some embodiments, the sensor data includes one or more of: image data, temperature data, pressure data and motion data.

In accordance with another aspect of this disclosure, there is provided a system for determining a decision for an offline hardware system. The system includes a plurality of sensors for capturing sensor data about an environment of the offline hardware system; at least one system processor configured to: receive the sensor data from the plurality of sensors; preprocess the sensor data to obtain preprocessed sensor data; and generate a command for the hardware system based on the decision; and at least one hardware processor configured to: determine, using one or more pre-trained decision-making models the decision for the offline hardware system based on the preprocessed sensor data, each of the one or more decision-making models being a large language model (LLM) compressed using tensor networks.

In some embodiments, each of the at least one hardware processor is a field programmable gate array (FPGA) or an analog chip.

In some embodiments, the offline hardware system is a component of one of: a ship, a vehicle, a satellite or a defense system.

In some embodiments, at least one of the one or more trained decision-making models is compressed by: identifying layers of the LLM and corresponding weight matrices decomposing the weight matrices of the LLM into a tensor network structure; compressing the decomposed weight matrices; and storing the tensor network structure in a data storage medium for transferring to the hardware system.

In some embodiments, preprocessing the sensor data comprises one or more of: reducing noise in the sensor data, normalizing sensor data values, extracting features from the sensor data determined to be relevant.

In some embodiments, the decision is an operation critical decision.

In some embodiments, the sensor data includes one or more of: image data, temperature data, pressure data and motion data.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1A is a block diagram of an example hardware system, in accordance with an embodiment;

FIG. 1B is a block diagram of an example system processor of the example hardware system of FIG. 1A, in accordance with an embodiment;

FIG. 2 is a flowchart of an example method for decision-making for a hardware system, in accordance with an embodiment;

FIG. 3A is a flowchart of an example method for compressing a large language model (LLM) that may be used for decision making, in accordance with an embodiment;

FIG. 3B is a flowchart of an example method for compressing a large language model (LLM) that may be used for decision making, in accordance with an embodiment;

FIG. 4 shows an example tensor representation of an initial weight matrix, a corresponding tensor star and the corresponding tensor network; and

FIG. 5 shows an example tensor decomposition of a tensor.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object-oriented programming. The program code may be written in C++, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

Sensors are widely used to collect data about the environment in which a system operates. Once collected, sensor data can be analyzed to determine a state of the system and in some cases, to make a decision for the system.

Existing systems collect sensor data locally and transmit the collected sensor data to an external system configured to analyze and make predictions about or based on the sensor data. In these systems, the collected sensor data is typically pre-processed by at least one controller, or directly transmitted to external/remote devices without pre-processing. Typically, this data transmission is accomplished over the internet. However, these systems can fail to return a decision when the system loses internet connectivity. The loss of connectivity can be particularly disadvantageous and, in some cases, dangerous, when the system is used in mission-critical applications.

In automotive applications for example, cameras and/or other sensors located on the vehicle typically collect data about the vehicle's environment. This data must be analyzed within milliseconds to determine an action (e.g., steering, alerting the driver) for the vehicle to ensure the vehicle's safety. Typically, the collected data is transmitted to a remote server for analysis using deep learning models such as large language models (LLMs). However, interruptions in network connectivity can lead to the vehicle failing to receive the necessary instructions in time to safely make a decision for the vehicle.

Conventional real-time processing typically also requires dedicated processors that require significant computational resources and have high energy and processing requirements, making real-time processing typically unsuitable for environments that have space constraints or have limited computational resources. In automotive applications for example, vehicles typically do not have the necessary processing resources to process large volumes of complex data.

The described embodiments enable a hardware system to make decisions locally, without accessing an internet cloud connection. The described embodiments can be used for making operation critical decisions. The described embodiments can be used in applications involving operation critical decisions, including, but not limited to self-driving vehicles, satellite-based communications and defense systems.

The described embodiments can use compressed decision-making models, enabling the models to be deployed on hardware processors having limited memory. The described embodiments enable sensor data to be analyzed and decisions to be made based on the sensor data in real-time, allowing for rapid decision-making in applications where timely responses are preferable or necessary, such as, but not limited to, autonomous vehicles or military operations. By processing and acting on information locally, the described embodiments can reduce latency and increase reliability, particularly in remote or contested environments where cloud connectivity is not available or is unreliable.

Some of the embodiments described herein can employ a combination of offline and online processing. For example, the embodiments described can transmit data for online processing when a stable internet connection is available and process data locally, in an offline manner when the internet connection is unstable or unavailable.

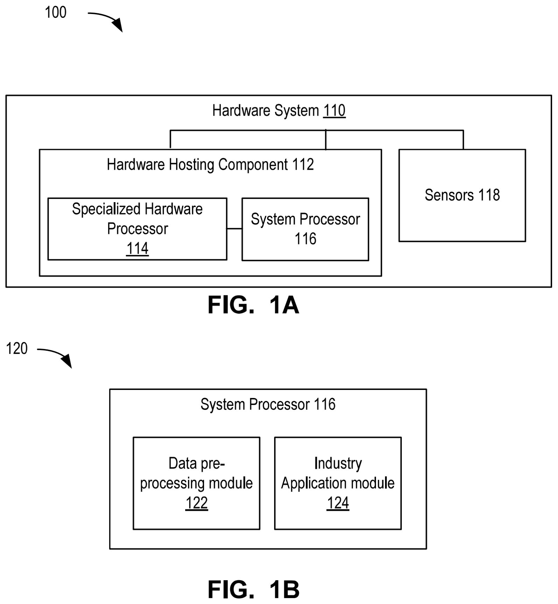

Referring first to FIG. 1A, shown therein is a block diagram 100 of a hardware system for which decisions can be determined. The hardware system 110 can be a system that can operate offline i.e., a system that lacks an internet connection or that can function without an internet connection. For example, the hardware system 110 can be operated in environments where internet connectivity is unreliable or does not exist.

The hardware system 110 can be a hardware system of any physical system or device for which a decision can be made and which can implement the decision, for example, a hardware system for ship, a satellite, a self-driving vehicle.

As described, the hardware system 110 can be a hardware system for self-driving vehicle. As the self-driving vehicle drives on the road, the self-driving vehicle may encounter environments with poor network connectivity (e.g., a tunnel, a remote region). The embodiments described herein can enable a self-driving vehicle to make decisions in real-time, even when the self-driving vehicle is in an environment with poor network connectivity, enhancing the reliability of self-driving vehicles.

The hardware system 110 includes a hardware hosting component 112, a system processor 116 and sensors 118. The hardware hosting component, the system processor 116 and the sensors 118 can communicate with each other via a hardware interaction module (not shown).

The hardware hosting component 112 can be a physical component for housing one or more specialized hardware processors 114 and one or more system processors 116. In some embodiments, the hardware hosting component 112 can house additional components (e.g., power module, memory). In other embodiments, the hardware hosting component 112, only houses the specialized hardware processors 114 and the additional components and the system processor 116 are housed on one or more separate components. The form factor and/or the materials used for constructing the hardware hosting component 112 can vary depending on the application of the hardware system 110. For example, if the hardware system 110 is used in a satellite, the hardware hosting component 112 can be made of materials that can withstand the vacuum of space. As another example, if the hardware system 110 is used in maritime applications, the hardware hosting component 112 can be made of materials resistant to saline conditions.

The specialized hardware processor (s)114 can be a low-memory hardware processor 114 configured for performing specific tasks and having a small footprint. For example, the specialized hardware processor(s) 114 can be a field programmable array (FPGA), a graphical processing unit (GPU), a central processing unit (CPU) or other classical processor, a tensor processing unit (TPU), a neural processing unit (NPU), or an analog chip. The type(s) of the specialized hardware processor(s) can vary depending on the application of the hardware system 110, including the performance required for the application of the hardware system 110, the energy constraints of the hardware system 110 and/or the environmental requirements of the hardware system 110. For example, if the hardware system 110 requires energy efficiency, the specialized hardware processor 114 can be an analog chip. As another example, if the hardware system 110 requires a faster response time, such as when the hardware system 110 needs to make decisions in real-time, the specialized hardware processor 114 can be an analog chip. As another example, if the hardware system 110 requires frequent reconfiguration, the specialized hardware processor 114 can be an FPGA. In some embodiments where the specialized hardware processor(s) 114 include at least one FPGA, the at least one FPGA is configured to run quantum-inspired tensor networks. Running quantum-inspired tensor networks can increase the processing speed at which the FPGA can process data.

The hardware hosting component 112 can house various specialized hardware processors 114 and each specialized hardware processor 114 can be configured to implement a decision-making model. For example, a first specialized hardware processor 114 can be used to implement a decision-making model for determining a decision based on temperature data and a second specialized hardware processor 114 can be used to implement a decision-making model for determining a decision based on image analysis.

The specialized hardware processor 114 can be an existing processor of the hardware system 110. For example, in some embodiments, the system or device on which the hardware system resides 110 may not require modifications to implement the embodiments described herein.

The system processor 116 can be implemented with any suitable processor, controller, digital signal processor, graphics processing unit, application specific integrated circuits (ASICs), and/or field programmable gate arrays (FPGAs) that can provide sufficient processing power for the configuration, purposes and requirements of hardware system 110. The system processor 116 can include more than one processor and each processor can be configured to perform different dedicated tasks. The system processor 116 can be configured to pre-process sensor data received from the sensors 118 and implement a decision determined by a decision-making model deployed on the specialized hardware processor 114.

As shown in FIG. 1B, which shows a block diagram 120 of the system processor 116, the system processor 116 can implement a data pre-processing module 122, configured to pre-process sensor data received from the sensors 118. The data pre-processing module 122 can process sensor data from each sensor 118 separately or can process sensor data from two or more sensors 118 together. The data pre-processing module 122 can employ one or more trained models to pre-process the sensor data.

The system processor 116 can implement an industry application module 124, configured to implement the decision determined by the decision-making model. For example, the industry application module 124 can receive the decision determined by the decision-making model and determine a response for the hardware system 110 or a response for a system external to the hardware system 110. The response can be a physical action. For example, based on sensor data indicating the presence of an obstacle on the road, the decision-making model can determine that a self-driving vehicle should come to a stop. The industry application module 124 can determine that coming to a stop requires the application of brakes and generate a braking command for the braking system of the self-driving vehicle.

As another example, in defense applications, based on the modulation scheme, the amplitude and/or the frequency of incoming signals (e.g., radar signals, communication signals), a defense system can determine that the incoming signals are associated with an enemy system and the decision-making model can determine that a missile system should be engaged. The industry application module 124 can determine that engaging a missile system requires the activation of actuators and generate a command to activate the actuators.

As a further example, based on sensor data indicating that the frequency band of a radio signal, the decision-making model can determine that signals received by a satellite should be routed to a given ground station. The industry application module 124 can generate a command to route the signals to the identified ground station.

The sensors 118 can be any type of sensors that can be used to sense data about the environment of the hardware system 110. For example, the sensors 118 can include temperature sensors for measuring temperature data, pressure sensors for measuring pressure data, motion sensors for measuring motion data, one or more cameras capturing images.

The sensors 118 can vary depending on the application of the hardware system. For example, a hardware system 110 used for climate monitoring can include temperature sensors collecting temperature data. As another example, a hardware system used in defense applications can include a camera capturing images.

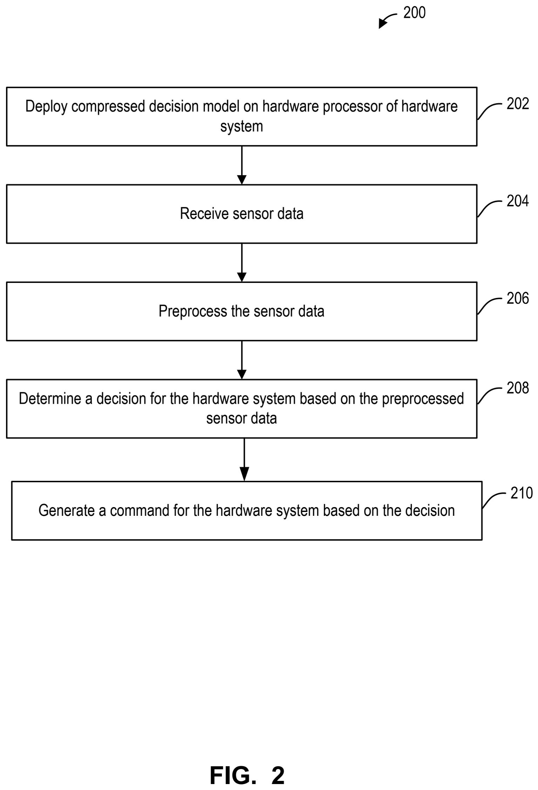

Referring next to FIG. 2, shown therein is a flowchart 200 of a method for decision-making for hardware systems using quantum-inspired compressed models. The method 200 can be implemented on the hardware system 110.

At 202, a compressed decision-making model is deployed on the specialized hardware processor 114 of the hardware system 110. As explained the specialized hardware processor 114 can be a processor having limited memory, for example a field programmable gate array (FPGA) or an analog chip. The type of specialized hardware processor 114 used can vary, depending on the application of the hardware system 110. For example, an analog chip is well suited for processing signals that represent continuous variations in physical phenomena and accordingly can be used in applications where temperature is being monitored. As another example, an FPGA is well suited for complex computations and accordingly can be used in applications involving image analysis.

The decision-making model can include one or more trained large language models (LLM) that have been compressed to reduce their size. The LLM(s) can include self-attention layers or multi-perceptron layers. The LLM(s) can be compressed using tensor network methods inspired by quantum computing, which can reduce the size of the LLM(s) while minimally impacting the performance of the LLM(s). Quantum-inspired tensor network compression methods involve reconfiguring the weight matrices of different deep layer modules of a deep learning model as tensor networks, which compress the correlation space of the model by keeping only those correlations that are relevant to describe the model and discarding the rest of the correlations. Other compression techniques that can be applied include quantization by reducing the floating-point accuracy of numbers, distillation by removing layers from the model, pruning by removing specific neurons, and low-rank approximations of weight matrices.

By compressing the LLM(s), the embodiments described herein can reduce memory requirements associated with storing and executing a decision-making model and can enable the decision-making model to be deployed on hardware with limited memory capacity, such as an FPGA or an analog chip. By deploying compressed LLM(s) on a processor of the hardware system 110, the hardware system 110 can make offline decisions, without requiring a network connection, or when the network connection is unstable. For example, in some embodiments, a decision-making model deployed on the specialized hardware processor 114 may be used when the internet connection is unstable or unavailable and a decision-making model implemented on a remote system may be used when the network connection is stable.

The decision-making model can be pre-trained prior to being deployed on the specialized hardware processor 114. The decision-making model can be saved on a memory of the hardware system 110.

The decision-making model can be a trained model, trained for making decisions according to the application of the hardware system. For example, the decision-making model can be a model trained to determine a risk of collision based on sensor data. In some embodiments, the decision-making model includes multiple models.

In some embodiments, the decision-making model is a pre-trained model that is compressed via pruning and healing method. Pruning and healing to reduce the size of the decision-making model can involve identifying groups of contiguous neural network layers of the decision-making model that share a common dimension and that must be pruned together based on a dependency graph; selecting a key layer from each identified group to set a compression rate limit, wherein the first layer of each group is selected as the key layer; applying Singular Value Decomposition (SVD) to a weight matrix of the selected key layer to decompose the matrix into orthogonal matrices and a diagonal matrix of singular values; truncating singular values based on predefined thresholds, including absolute, relative, and cumulative discarded weight thresholds, to determine a maximum compression rate; ranking and identifying less important weight channels within the weight matrix based on similarity measures and importance scores; and removing the identified less important channels from all layers in the pruning group while preserving the shared dimension.

The decision-making model can be compressed according to the application of the hardware system 110. For example, portions of the LLM that are not relevant to tasks and actions performed by the hardware system 110 can be removed from the decision-making model. As another example, the compression scheme can vary depending on the application.

In at least one embodiment where the LLM has multiple layers, the LLM can be compressed by removing one or more layers, based on the application of the hardware system 110. For example, if the LLM is configured for deployment on multiple different systems (e.g., vehicle, aircraft, satellite) but will be deployed on a specific system, information relating to other systems can be removed from the LLM. In such cases, the LLM can be retrained using a retraining module, wherein the retraining results in an uncorrelated output, and compressed using a tensorization module, wherein the compression uses tensor networks.

The processor can implement a tensorization module that compresses the decision-making model using mathematical structures.

The decision-making model can be configured to be compatible with the architecture of the hardware processor 114.

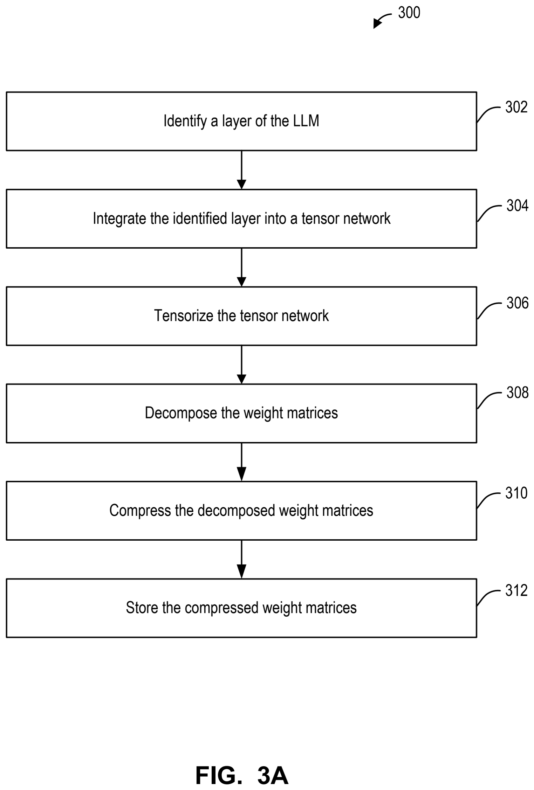

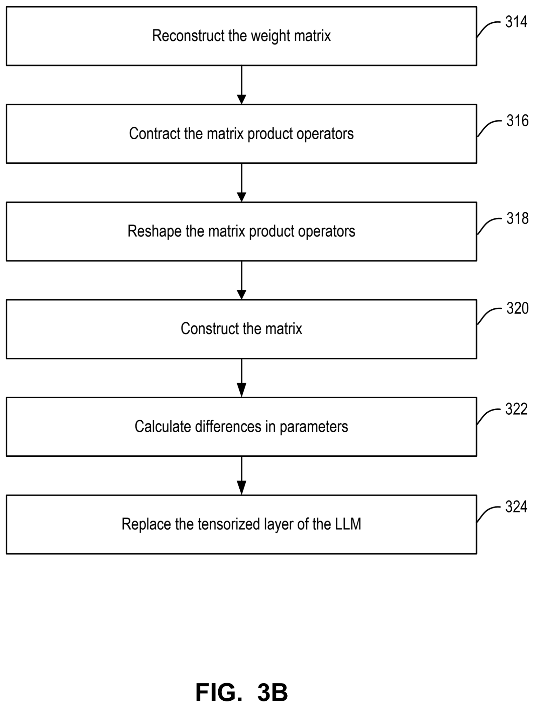

The decision-making model can be compressed according to the method 300 shown in FIGS. 3A-3B, though it will be understood that the decision-making model can be compressed using other techniques. The decision-making model can be one or more LLMs having a plurality of layers and corresponding weight matrices. The method 300 can be implemented by a processor external to the hardware system 110.

At 302, the processor identifies an initial layer of the LLM and a corresponding weight matrix. The choice of the identified initial layer can be arbitrary.

The LLM may include a plurality of layers which can be represented by a corresponding weight matrix, the from of which may vary depending on the type of layer. For example, fully connected layers may be represented by a single weight matrix of dimension m x n that corresponds input vectors of size n to output vectors of size m. In some examples, layers may be represented by more than one layer. For example, the LLM may include attention layers, which may be represented by a plurality of matrices that represent, for example, queries, keys, values, and output projections.

Optionally, the identified initial layer may be a layer that is mathematically suitable to be represented in the form of a weight matrix. For example, the initial layer may be a fully connected layer, a convolutional layer, a recurrent layer, an attention layer, or any other layer in which one or more linear operations is applied.

In one non-limiting example, the LLM may be the *Llama-2-7b-hf* model, but it will be understood that other similar foundation models may be used. The *Llama-2-7b-hf* model is a fine-tuned generative text model with (currently) 7 billion parameters. The *Llama-2-7b-hf* model may be optimized for dialogue use cases and may be converted into Hugging Face Transformers format. The Hugging Face transformers may be obtained from the Hugging Face community at the following website: huggingface.co. The *Llama-2-7b-hf* module is part of the Llama-2 family of large language models (LLMs), which includes pretrained and fine-tuned generative text models ranging in scale from 7 billion to 70 billion parameters. The *Llama-2-7b-hf* model has self-attention layers and multi-perceptron layers with weight matrices that can be tensorized as explained below.

At 304, the processor integrates the identified initial layer of the LLM into layers of a tensor network (i.e., recycles or upgrades layers of the LLM).

A tensor is a multi-dimensional array represented by $T_{\alpha\beta\gamma}$ that describes a multilinear relationship between sets of algebraic objects related to a vector space. The subscripts $\alpha\beta\gamma$ denote the tensor dimensions (in this case 3 dimensions, as there are three subscripts) and this value is termed the "rank" of the tensor. The tensors can map between different objects such as vectors, scalars, and other tensors. There are many types of tensors, including scalars and vectors, dual vectors, multilinear maps between vector spaces, and dot product operation. The tensors are defined independent of any basis.

At 306, the processor tensorizes the tensor network. Tensorization is the process of transforming or mapping lower-order data to higher-order data. For example, the low-order data can be a vector, and the tensorized result can be a matrix, a third-order tensor (i.e., rank three), or a higher-order tensor. The low-order data can also be a matrix or a third-order tensor. Tensorization can be used to compress data and/or reduce the complexity of data while preserving initial features of the data. By tensorizing the tensor network, the size of the decision-making model can be reduced.

The processor can tensorize the tensor network by determining a representation of the weight matrix of the tensor network. The weight matrix can be stored in memory. In machine learning, a weight matrix is a matrix of numerical values that represent the strength of the connections between nodes in the layer of the neural network of the LLM. The numerical values are used to transform the input data from the input sequence within the neural network's hidden layers. For example, when the input data enters a node in the neural network, the input data is multiplied by a weight value. The resulting output from the node is either observed or passed to the next layer in the neural network. The weight matrix is typically contained within the hidden layers of the neural network. The weight matrix is adjusted during training of the neural network to improve the accuracy of the language model's predictions.

Tensor neural networks (TNN) and tensor convolutional neural networks (TCNN) are examples of deep neural networks (NN) in which the weight matrices of the hidden layers of the large language model can be replaced by tensor network structures created using factorization techniques, for example, singular value decomposition (SVD). SVD and other factorization techniques can help achieve a balance between compression and accuracy, since SVD and other factorization techniques can efficiently reduce the number of parameters in a model while preserving accuracy. By replacing the weight matrices of hidden layers with tensor network structures, the size of the LLM can be reduced, allowing the LLM to be deployed onto the hardware system 110.

Tensor neural networks have better performance and accuracy than standard deep neural networks for reducing parameter space and thus the amount of storage required to store the LLM. In tensor neural networks, the tensorization takes place only at the level of the hidden layers (e.g., trainable weights). Training of a large language model can be performed by a processor by optimizing the contracted trainable weight matrices of the layers based on standard optimization techniques, for example gradient descent and/or automatic differentiation.

An efficient representation of weight matrices can be obtained by replacing the weight matrices of a large language model using Matrix Product Operators (MPO) having a bond dimension $\chi$. The MPOs are created by executing sequential Singular Value Decompositions (SVDs) on the weight matrices and retaining the largest $\chi$ singular values at each SVD. The replaced weight matrices for a new tensorized layer which has several trainable weights are then represented by the MPO. The resulting TNN is scalable and can have any desired number of TN layers to form a deep neural network.

At 308, the processor decomposes the weight matrices obtained at 306 into a tensor network structure. Decomposing the weight matrices can involve creating a tensor star formed from a plurality of tensors, the plurality of tensors having a smaller dimension than the weight matrices.

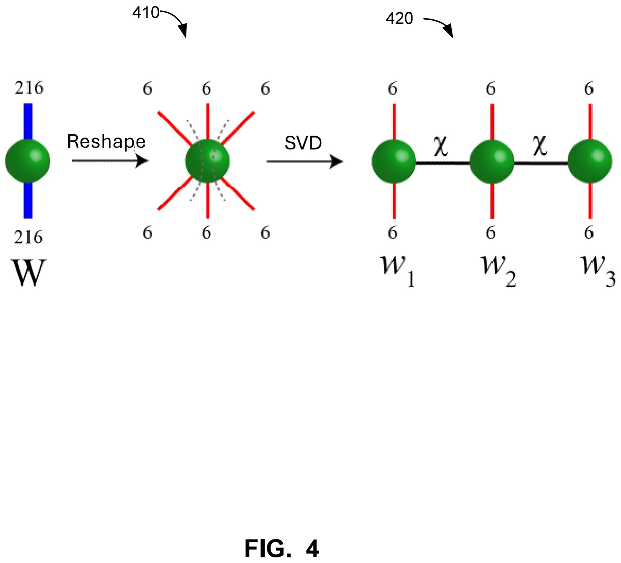

FIG. 4 shows a tensor representation of an initial weight matrix W which has a dimension of 216 x 216 to illustrate this point. It will be appreciated that the value 216x216 is merely illustrative and not limiting of the invention. The initial two dimension of the weight matrix are split into smaller dimensions, as shown by the "tensor star" 410, whereby the product of the smaller dimensions is equal to the initial dimension. The tensor star 410 is then converted by two sequential SVDs to form the resulting tensor network 420 of $2\times36\chi+36\chi^2$ parameters, amounting to the sum of parameters of each tensor, with $\chi$ being the MPO bond dimension serving as a truncation parameter. In the diagrammatic representation of MPOs shown in FIG. 4, circles represent individual ones of the tensors, lines indicate the tensor indices and lines connecting circles represent contracted shared indices between the tensors.

It will be appreciated that there are an infinite number of possibilities to decompose the weight matrix W into "the tensor star" 410 shown and then into the tensor network 420. However, not all of the possibilities will lead to an efficient decomposition. In order to reduce the number of possibilities for the tensor decomposition, a number of core tensors is adapted to each training model task. For example, a number of the core tensors can be programmed in advance, set, or decided by a user of the training model.

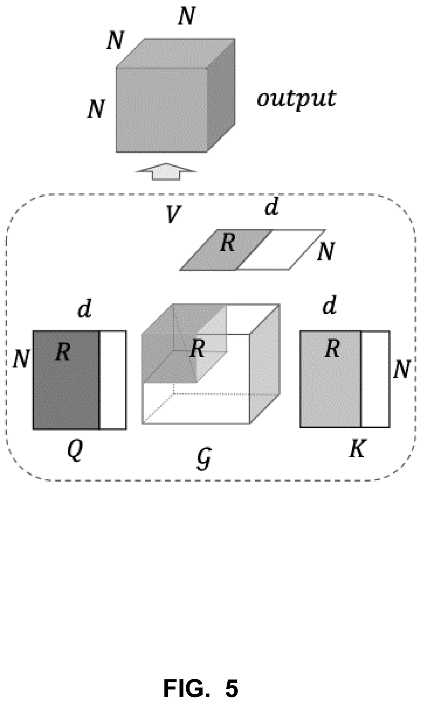

For example, the core tensors can be compressed tensors that are used in a Tucker decomposition of a larger tensor, as shown in FIG. 5. FIG. 5 shows blocks representing a query matrix Q, a key matrix K as well as a value matrix V of the LLM. The query matrix Q and the key matrix K are derived from the input sequence to the LLM. The key matrix K represents the relation strength of the words in the input sequence. The value matrix V is calculated from the query matrix Q and the key matrix K to be used as the output. In FIG. 6, it is assumed that the matrices are three factor matrices which are composed of three groups of orthogonal basis vectors. R is the rank of the tensor and N is the length of the input sequence. The dimension of the matrices is given by d. The new single block attention is the core tensor G.

Tucker decomposition is a low-rank decomposition method that involves decomposing a tensor network into a set of matrices and one small core tensor. Tucker decomposition reduces the size of indices of the large tensor with minimal loss of the information. The obtained compressed tensor is the "core" tensor. The number of core tensors ranges from two to the rank of the tensor representation. The number core tensors is a hyperparameter in the neural network.

To perform Tucker decomposition, a single-block attention module is built based on the Tucker decomposition. The Tucker decomposition is a low-rank decomposition method. In the paper "Attention is all you need," arXiv: 1706.03762v7 by Ashish Vaswani et al. a multi-head attention module is a principal part of the Transformer. The multi-head attention module is constructed by a large number of parameters. As set out in the paper, Vaswani et al. computes the multi-head attention module based on a set of queries derived from the input sequence simultaneously. The set of queries is packed together into the query matrix Q, and keys matrices and values matrices are packed together into the key matrix K and the value matrix V, respectively. The multi-head attention module adopts a non-linear function *softmax* over two matrices Q and K.

A non-linear function of the Transformer is difficult to compress. In order to overcome this challenge, the output of the multi-head attention function of the self-attention model is linearly represented by a group of orthonormal basis vectors. After linear representation, a low rank core tensor is initialized using Tucker decomposition. Tucker decomposition reconstructs in a new multi-head attention representation with factor matrices Q, K and V.

A Block-Term Tensor Decomposition (BTD) is used in order to construct the multi-head attention with the factor matrices Q, K and V and in order to compress the language model. The multi-linear attention module uses parameter sharing, for example, sharing factor matrices across multiple blocks. The Block-Term Tensor Decomposition (BTD) is a combination of CP (CANDECOMP/PARAFAC) decomposition and the Tucker decomposition.

The 3-order block tensor reconstructs the scaled dot-product self-attention module in the Transformer by a sum on a particular dimension.

The LLM compression of the present invention accordingly achieves higher compression ratios. The self-attention module (for example, a scaled dot-product attention) in the Transformer is split into the 3-order block tensor (the output of multi-linear attention) which improves accuracy.

It is a known challenge in the prior art that the multi-head attention model cannot be directly integrated into the encoder and the decoder framework of the Transformer. The present invention provides a solution. First, the average of each block tensor is computed. Then, multiple matrices are formed by a tensor split. Then, a concatenation of the multiple matrices is served as an input to the next layer network in Transformer. After performing these three steps, the multi-head attention model can be integrated into the encoder and into the decoder framework of the Transformer and to be trained end-to-end.

The self-attention function can be represented by a linear function, for example, by a linear combination representation of a set of basis vectors.

The output of the self-attention function is represented by a linear combination of the set of the basis vectors:

$$Attention\ (Q, K, V) = (e_1, \dots, e_n)M,$$

wherein $e_1, \dots, e_n$ are the basis vectors from a vector space S. The basis vectors $e_1, \dots, e_n$ are linearly independent and $Q, K, V$ are the factors matrices which are linearly represented by the set of the basis vectors $e_1, \dots, e_n$. $M \in R^{n \times d}$ is a coefficient matrix, and (as noted above) $d$ is a dimension of the factor matrices Q, K and V.

A new attention function can be constructed via the Single-block attention module. Using the Single-block attention module, a 3-order diagonal tensor $g$ is initialized. The 3-order diagonal tensor $g$ is a trainable tensor. $R$ is the rank of the tensor. $N$ is the length of the input sequence. The function of the single-block attention module is computed based on the Tucker decomposition:

$$Atten_{TD}(G, Q, K, V) = G \bullet_1 Q \bullet_2 K \bullet_3 V = \sum_{i=1}^{I} \sum_{j=1}^{J} \sum_{m=1}^{M} G_{ijm} Q_i \circ K_j \circ V_m$$

wherein $G$ is the core tensor, $i, j,$ and m are indexes of the core tensor $G$. An operator " o " is the outer product, an operator "$\bullet_z$" is denoted as a tensor-tensor product on the $z$-th order and $z \in (1, \dots, d)$. $Q_i, K_j$ and $V_k$ are column vectors from matrices $Q, K,$ and $V$, where $Q \in R^{n \times d}$ $K \in R^{n \times d}$ and $V \in R^{n \times d}$. In one non-limiting example, $I=J=M=R$. The core tensor G is defined as follows: $G\_ijm = \begin{cases} rand(0,1) & i = j = m \\ 0 & otherwise \end{cases}$

where the $rand(0,1)$ is a random function, and the diagonal entries of the core tensor $G$ form the vector $g$. Each entry $g_r \in (0,1)$, $r \in (1, \dots, R)$. The vector $g$ is a trainable weight matrix. The trainable weight matrix $g$ can be computed by $softmax$ function. The $softmax$ function converts a vector of real numbers into a probability distribution.

The output of the single-block attention function is the 3-order tensor which is given by linear computation. Conventionally, compression of the multi-head module is made by multiple groups of linear mappings. In contrast, the present invention uses three linear mappings for the matrices $Q, K,$ and $V$. At the output of three linear mappings, three factor matrices $Q, K,$ and $V$ are considered to be three factor matrices in reconstructing the multi-linear attention.

FIG. 6 shows the reconstruction of the multi-linear attention. Suppose that $h$ is the number of the multi-head modules and $d$ is the dimension of the factor matrices $Q, K,$ and $V$. The compression ratios are computed by the following equation: $(3 \times h \times d)/(3 \times d+h)$. In one non-limiting example, the number of the multi-head modules $h$ is set to be eight and the dimension d is set to be 512. In this non-limiting example, the compression ratios achieve eights. In other words, almost eight times parameters are reduced in the attention layer.

The hyperparameters in machine learning are those parameters that are tuneable and are defined by the user to control the machine learning process. The hyperparameters are used to improve the learning of the large language model. The values of the hyperparameters are set before starting the learning process of the large language model. By contrast, the values of other parameters (typically node weights) are derived via training of the language model.

For each core tensor, a location of a physical edge and a way to connect the core tensor to other nodes in the tensor network is chosen. The physical edge is an edge connected to only one node of the tensor network. In one non-limiting example, the nodes are connected in an MPS (Matrix Product State) structure.

Another hyperparameter required from a user is the choice of a maximum virtual edge dimension. The virtual edge is an edge between two nodes of the tensor network. The virtual edge dimension having too large values would disrupt a parameter reduction effect provided by the tensorization process. The virtual edge dimension having too small values may lead to significantly different matrices at the output from the input matrices when the MPS structures are contracted.

An optimal virtual edge dimension for the MPS form should be chosen in order to achieve an optimal algorithm's performance. For example, genetic permutation optimization algorithms can be used to determine the optimal virtual edge dimension of the MPS form. In one non-limiting example, a random search for permutations is used to determine the optimal virtual edge dimension of the MPS form. In machine learning, the random search is a strategy that uses random combinations of the hyperparameters to identify the optimal answer for the established model.

A random search algorithm can involve performing a random permutation on the edges of the nodes of the tensor network. The edges of the nodes can be split into n groups, where n is the number of tensors in the tensor network.

Then, all the physical edges of the tensor network can be merged in one index. This index is a multi-index tensor transformed into a single-index vector. MPS decomposition is then performed.

The initial weight matrix is reconstructed by, firstly, contracting the MPS forms, then by reshaping the MPS forms into the permuted Cartesian form, followed by the step of permuting the edges of the tensor network with reverse of the random permutation and finally by reshaping the Cartesian form to the matrix form.

The difference between the elements of the initial matrix and the reconstructed matrix can then be computed. If the number of parameters is smaller than the number of elements in the initial weight matrix and the largest difference between two factors is smaller than the previous best one, the MPS is saved as the best contraction strategy.

The above steps are repeated m times, where m is an external parameter defined by the user and the best MPS decomposition is defined.

After defining the best MPS decomposition, the tensorized layer is constructed. The best MPS decomposition is a decomposition with the best accuracy possible and less relevant information lost during the compression of the weight layer. The best accuracy in one non-limiting example is equal to 87% of original model with compression to 70% of the original model. In another non-limiting example, the accuracy is equal to 85% of the original model with compressing to 60% of the original model. In yet another non-limiting example, the accuracy is 81% of the original model with compressing to 50% of the original model.

Construction of the tensorized layer can include four steps. In a first step, in order to initialize the tensor layer, the weight matrix is replaced with the tensor network structure to collect the information about the tensorization technique. The information about the tensorization technique enables to reconstruct the initial weight matrix. With the tensor network, the initial weight matrix could be reconstructed with the high accuracy.

In a second step, the tensor layer's parameters are extracted from the Tensor Network structure.

In a third step, the values are removed from the Tensor Network structure in order to free up a memory to avoid keeping unnecessary data..

In a fourth step, the selected technique and biases are initialized according to the input from the user.

The second change in the tensor layer occurs during a feed-forward step. Before a classical forward step, the weight matrix needs to be reconstructed. The reconstruction of the weight matrix provides more efficient strategies for the MPS contraction. For the MPS contraction, the language model parameters need to be reintroduced into the TN. Then the tensor layer is contracted to obtain the weight matrix. After contraction of the tensor layer, the memory of the Tensor Network structure is freed up again to avoid keeping unnecessary data in the memory.

When the tensor network is initialised, the tensorized layer is replaced in the initial language model. Attention has to be paid to allocate the tensorized layer precisely in the place from which the tensor layer has been recycled. In one non-limiting example, the allocation of the tensor layer exactly in the same place is done by conserving the name of the initial module.

At 310, the processor compresses the decomposed weight matrices. Compressing the decomposed weight matrices can involve using a random search algorithm for performing a permutation on edges of nodes of the tensor network. Compressing the decompressed weight matrices can involve truncating indicates of the tensors in the tensor network. The compressed weight matrix can be used for recomputing a new weight matrix for the associated layer. It will be noted that the size of the (re-computed) new weight matrix will be slightly different from the size of an initial (before the decomposition) weight matrix since during the compression as some irrelevant information may be lost.

At 312, the processor stores the tensor network structure in a data storage medium, such as a memory of the hardware system 110. In some embodiments, the processor stores the tensor network structure in a storage medium external to the hardware system 110 and transfers the tensor network structure to the hardware system 110 via a wired connection or over the internet.

At 314 the specialized hardware processor 114 can reconstruct the weight matrix. Reconstructing the weight matrix can involve, at 316, contracting the MPOs and at 406, re-shaping the MPOs into the form of a tensor star.

At 318, the processor reshapes the tensor star back into a matrix form as will be explained in further detail below.

At 322, the processor calculates the difference between the elements of the initial weight matrix and the reconstructed weight matrix to determine whether the reconstructed weight matrix is smaller than the initial weight matrix. This process is repeated a number of times using different permutations and the smallest one of the reconstructed weight matrices is kept. This value will provide an acceptable decomposition.

At 324, the processor replaces the tensorized layer of the LLM with the decomposed layer. The LLM with tensorized layers can correspond to the compressed decision-making model.

Returning to FIG. 2, at 204, the system processor 116 receives sensor data from the sensors 118. In some embodiments, the sensor data can be pre-processed prior to being received by the system processor 116. For example, each sensor can be associated with a processor that can pre-process the sensor data collected by that sensor.

At 206, the system processor 116 preprocesses the sensor data received at 204. Preprocessing the sensor data can involve converting the sensor data so that the sensor data can be used by the decision-making model. Preprocessing the sensor data can include reducing noise in the sensor data, normalizing sensor data values to a standard range and/or extracting features determined to be relevant from the sensor data. The preprocessed sensor data is then transmitted to the specialized hardware processor 114. In some embodiments, sensor data from two or more sensors is combined prior to being transmitted to the specialized hardware processor 114.

At 208, the specialized hardware processor 114 executes the decision-making model to determine a decision for the hardware system 110 based on the preprocessed sensor data. The type of decision can vary, depending on the decision-making model and the application of the hardware system 110. The specialized hardware processor 114 then transmits the decision to the system processor 116 of the hardware system 110. The hardware processor can transmit the decision via an interaction module of the hardware system 110.

In some embodiments, the specialized hardware processor 114 executes multiple decision-making models to determine a decision for the hardware system 110. For example, there may be different decision-making models depending on the type of sensor data and the result of the different decision-making models may be combined to obtain the decision.

At 210, the system processor 116 generates a control signal for implementing the decision. The control signal can be a control signal that causes the hardware system 110 to perform an action. For example, based on a decision to stop a vehicle, the system processor 116 can generate a control signal for the braking system of the vehicle to cause the vehicle to come to a stop. As another example, the system processor 116 can generate a recommendation based on the decision. For example, the system processor 116 can cause a recommendation advising a driver to brake to be displayed on a display of the vehicle. As another example, based on a type of signal received by a satellite, the system processor 116 can generate a control signal to route the signal or route a communication signal to a ground station or to another satellite, or generate a control signal for the satellite to reposition itself. The nature of the control signal can vary depending on the hardware system 110 and/or based on the nature of the sensor data.

In some embodiments, the decision-making model can be specific to the hardware system 110. For example, the decision-making model can be trained using training data specific to the target hardware system 110 and can be trained to make decisions specific to the target hardware system 110. The decision-making model can map an LLM output to a control signal for the hardware system 110 and the industry application module of 124 of the system processor 116 of the hardware system 110 can generate a control signal for a component of the hardware system (e.g., router, actuator, motor, etc.) to effect the control signal.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

**Claims**

1. A method of determining a decision for an offline hardware system comprising at least one system processor, a plurality of sensors and at least one specialized hardware processor, the method comprising:

   receiving, at the at least one system processor, sensor data from the plurality of sensors;
   preprocessing, at the at least one system processor, the sensor data to obtain preprocessed sensor data;
   determining, at the at least one specialized hardware processor, using one or more trained decision-making models the decision for the offline hardware system based on the preprocessed sensor data, each of the one or more decision-making models being a large language model (LLM) compressed using tensor networks; and
   generating a command for the hardware system based on the decision.

2. The method of claim 1, wherein each of the at least one hardware processor is a field programmable gate array (FPGA) or an analog chip.

3. The method of claim 1 or 2, wherein the offline hardware system is a component of one of: a ship, a vehicle, a satellite or a defense system.

4. The method of any one of claims 1 to 3, wherein at least one of the one or more trained decision-making models is compressed by:

   identifying layers of the LLM and corresponding weight matrices
   decomposing the weight matrices of the LLM into a tensor network structure;
   compressing the decomposed weight matrices; and
   storing the tensor network structure in a data storage medium for transferring to the hardware system.

5. The method of any one of claims 1 to 4, wherein at least one of the one or more trained decision-making models is compressed by pruning and healing the at least one of the one or more trained decision-making models.

6. The method of any one of claims 1 to 4, wherein preprocessing the sensor data comprises one or more of: reducing noise in the sensor data, normalizing sensor data values, extracting features from the sensor data determined to be relevant.

7. The method of any one of claims 1 to 4, wherein the decision is an operation critical decision.

8. The method of any one of claims 1 to 6, wherein the sensor data includes one or more of: image data, temperature data, pressure data and motion data.

9. A system for determining a decision for an offline hardware system, the system comprising:

a plurality of sensors for capturing sensor data about an environment of the offline hardware system;
at least one system processor configured to:

receive the sensor data from the plurality of sensors;
preprocess the sensor data to obtain preprocessed sensor data; and
generate a command for the hardware system based on the decision; and

at least one hardware processor configured to:
determine, using one or more pre-trained decision-making models the decision for the offline hardware system based on the preprocessed sensor data, each of the one or more decision-making models being a large language model (LLM) compressed using tensor networks.

10. The system of claim 8, wherein each of the at least one hardware processor is a field programmable gate array (FPGA) or an analog chip.

11. The system of claims 8 or 9, wherein the offline hardware system is a component of one of: a ship, a vehicle, a satellite or a defense system.

12. The method of any one of claims 1 to 3, wherein at least one of the one or more trained decision-making models is compressed by:

identifying layers of the LLM and corresponding weight matrices
decomposing the weight matrices of the LLM into a tensor network structure;
compressing the decomposed weight matrices; and
storing the tensor network structure in a data storage medium for transferring to the hardware system.

13. The system of any one of claims 8 to 10, wherein preprocessing the sensor data comprises one or more of: reducing noise in the sensor data, normalizing sensor data values, extracting features from the sensor data determined to be relevant.

14. The system of any one of claims 8 to 11, wherein the decision is an operation critical decision.

15. The system of any one of claims 8 to 12, wherein the sensor data includes one or more of: image data, temperature data, pressure data and motion data.

100

Hardware System 110

Hardware Hosting Component 112

Specialized Hardware Processor 114

System Processor 116

Sensors 118

**FIG. 1A**

120

System Processor 116

Data pre-processing module 122

Industry Application module 124

**FIG. 1B**

200

Deploy compressed decision model on hardware processor of hardware system — 202

Receive sensor data — 204

Preprocess the sensor data — 206

Determine a decision for the hardware system based on the preprocessed sensor data — 208

Generate a command for the hardware system based on the decision — 210

# FIG. 2

300

| Identify a layer of the LLM | 302 |

| Integrate the identified layer into a tensor network | 304 |

| Tensorize the tensor network | 306 |

| Decompose the weight matrices | 308 |

| Compress the decomposed weight matrices | 310 |

| Store the compressed weight matrices | 312 |

**FIG. 3A**

```
┌─────────────────────────────────────────────────────┐
│         Reconstruct the weight matrix                │── 314
└─────────────────────────────────────────────────────┘
                          │
                          ▼
┌─────────────────────────────────────────────────────┐
│        Contract the matrix product operators         │── 316
└─────────────────────────────────────────────────────┘
                          │
                          ▼
┌─────────────────────────────────────────────────────┐
│        Reshape the matrix product operators          │── 318
└─────────────────────────────────────────────────────┘
                          │
                          ▼
┌─────────────────────────────────────────────────────┐
│              Construct the matrix                    │── 320
└─────────────────────────────────────────────────────┘
                          │
                          ▼
┌─────────────────────────────────────────────────────┐
│          Calculate differences in parameters         │── 322
└─────────────────────────────────────────────────────┘
                          │
                          ▼
┌─────────────────────────────────────────────────────┐
│        Replace the tensorized layer of the LLM       │── 324
└─────────────────────────────────────────────────────┘
```

# FIG. 3B

FIG. 4

**FIG. 5**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHUMAILA JAVAID ET AL: "Large Language Models for UAVs: Current State and Pathways to the Future", ARXIV.ORG CORNELL UNIVERSITY LIBRARY, 201 OLIN LIBRARY CORNELL UNIVERSITY ITHACA, NY 14853, 2 May 2024 (2024-05-02), XP091746158, * sections IV and VII; figure 2 * | 1-15 | INV. G06N3/0495 |
| A | ANDREI TOMUT ET AL: "CompactifAI: Extreme Compression of Large Language Models using Quantum-Inspired Tensor Networks", ARXIV.ORG CORNELL UNIVERSITY LIBRARY, 201 OLIN LIBRARY CORNELL UNIVERSITY ITHACA, NY 14853, 25 January 2024 (2024-01-25), XP091677430, * page 1 - page 4; figure figure 1 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 24 April 2026 | Nourestani, S |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASHISH VASWANI**. Attention is all you need. *arXiv: 1706.03762v7*